Europäisches Patentamt

European Patent Office

Office européen des brevets

(11) Publication number: **0 298 518 B1**

# EUROPEAN PATENT SPECIFICATION

(45) Date of publication of patent specification: **31.03.93**    (51) Int. Cl.⁵: **B60M 1/13**, C23C 2/04

(21) Application number: **88110982.1**

(22) Date of filing: **08.07.88**

(54) **Method for manufacturing a copper-clad steel trolley wire.**

(30) Priority: **10.07.87 JP 171252/87**
**11.07.87 JP 173360/87**

(43) Date of publication of application:
**11.01.89 Bulletin 89/02**

(45) Publication of the grant of the patent:
**31.03.93 Bulletin 93/13**

(84) Designated Contracting States:
**CH DE ES FR GB LI**

(56) References cited:
**EP-A- 0 149 063**
**AT-B- 149 028**
**DE-B- 1 269 856**
**DE-C- 536 656**

**PATENT ABSTRACTS OF JAPAN, unexamined applications, section C, vol. 11, no. 214, July 10, 1987; THE PATENT OFFICE JAPANESE GOVERNMENT, page 14/C 434Kokai-no. 62-30 866 (FUJIKURA LTD)**

(73) Proprietor: **FUJIKURA LTD.**
**1-5-1, Kiba**
**Koto-ku Tokyo(JP)**

Proprietor: **RAILWAY TECHNICAL RESEARCH**

**INSTITUTE**
**2-8-38, Hikari-cho**
**Kokubunji-shi Tokyo(JP)**

(72) Inventor: **Takayama, Teruyuki**
**c/o FUJIKURA LTD 1-5-1, Kiba Koto-ku**
**Tokyo(JP)**
Inventor: **Tominaga, Haruo**
**c/o FUJIKURA LTD 1-5-1, Kiba Koto-ku**
**Tokyo(JP)**
Inventor: **Yokoya, Kazuo**
**c/o FUJIKURA LTD 1-5-1, Kiba Koto-ku**
**Tokyo(JP)**
Inventor: **Miyauchi, Kenichi**
**c/o SAKURA WORKS, FUJIKURA LTD 1440,**
**Mutsusaki**
**Sakura-shi Chiba-ken(JP)**
Inventor: **Nagasawa, Hiroki**
**2-22-14 Mitsufuji**
**Musashimurayama-shi Tokyo(JP)**
Inventor: **Aoki, Sumihisa**
**3-2-28, Shinmachi**
**Fuchu-shi Tokyo(JP)**

(74) Representative: **Prüfer, Lutz H., Dipl.-Phys.**
**Harthauser Strasse 25d**
**W-8000 München 90 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a method for manufacturing a copper-clad steel trolley wire, which comprises a steel core wire and a copper or copper-alloy layer covering the peripheral surface of the core.

Conventionally, copper wires or copper alloy wires are used for railroad-use trolley wires. The electric trains of nowadays are positively expected to travel at high speed, so that the trolley wires are required to have improved strength.

In order to increase the traveling speed of the electric trains, the wave propagation velocity of the trolley wires should be increased in advance. The wave propagation velocity C may be given by

$$C = \sqrt{T/\rho} \qquad (1)$$

where T is the wiring tension, and $\rho$ is the linear density (weight per unit length) of a trolley wire.

As seen from equation (1), the wave propagation velocity C can be increased by heightening the tension T or by lowering the linear density $\rho$.

Thereupon, an aluminum-composite trolley wire is proposed as a trolley wire with lower linear density $\rho$ and higher propagation velocity C. This wire is composed of a steel wire and an aluminum covering layer pressure-bonded thereto.

According to this conventional aluminum-composite trolley wire, however, metal fixtures currently used therefor are made of copper alloy, so that galvanic corrosion may be caused between the metal fixtures and the aluminium covering layer of the trolley wire. Such corrosion can be avoided only by forming the metal fixtures from a material which cannot suffer galvanic corrosion with aluminium. This countermeasure is not practical, however, in view of cost performance.

A composite trolley wire which combines a copper-based material and an iron-based material of higher strength than copper is disclosed in document DE-C-536 656. The copper layer is welded or soldered to the iron core in a manner which is not described in detail and the composite wire is than rolled such that an elongate cross section is obtained.

In this composite trolley wire composed of the iron- and copper-based materials, however, corrosion may be caused between the two materials, practically entailing a lot of problems. To prevent such corrosion, a lead or tin layer is interposed between the iron- and copper-based materials (see Japanese Patent Disclosure No. 53-122786). The interposition of such an intermediate layer would, however, lower the strength of the trolley wire, and require more complicated manufacturing processes.

The method of manufacturing a composite trolley wire with increased corrosion resistance is described in Japanese Patent Application 62-30866. According to this method a copper coated steel wire is scalped to form a copper coated core wire which is thereafter passed through a copper path for forming a copper coating layer and than subjected to rolling and cooling. The rolling conditions are not specified in detail.

It is further known from document DE-B-1269856 to manufacture a copper-clad-steel wire by first shaving of the outer steel layer of a steel core by means of a scalping die and thereafter passing the bare steel core through a copper bath.

It is the object of the present invention to provide a method for manufacturing a copper-clad steel trolley wire, which is free from galvanic corrosion with metal fixtures, improved in wear resistance and corrosion resistance and having higher strength to permit higher wiring tension. This object is achieved according to the present invention by means of a manufacturing method as defined in claim 1.

Since the copper-clad steel trolley wire manufactured by the method of the present invention uses the steel wire as a core it can enjoy high strength and wiring tension. Thus, with use of this trolley wire, the travelling speed of electric trains can be increased.

Essentially composed of the steel wire, moreover, the trolley wire is high in wear resistance.

Since the core is covered with the copper or copper-alloy covering layer preferably with a cross-sectional area ratio of 45 to 75 %, furthermore, galvanic corrosion with copper-alloy fixtures can be prevented. Thus, the trolley wire can be installed directly by means of conventional metal fixtures. Also, the trolley wire can enjoy a required electrical conductivity (50 % IACS or more).

According to the present invention, moreover, the steel wire, as the core, and the copper or copper-alloy region, as the covering layer, are metallurgically bonded to each other, so that corrosion cannot advance at the boundary between the core and the covering layer. Thus, even if the boundary is exposed, for example, water or the like can be prevented from penetrating the boundary.

Since the steel wire and the copper or copper-alloy are metallurgically bonded, furthermore, the covering layer can be restrained from being separated from the core at the boundary between them. Thus, the covering layer and the core can be bonded with sufficient strength.

2

In the method for manufacturing a copper-clad steel trolley wire according to the present invention, the steel wire, as the core, is immersed in the molten copper or copper alloy so that the molten metal adheres to the peripheral surface of the steel wire when it is solidified. In this manner, the cast rod is obtained which is composed of a copper-clad steel wire covered by copper or copper alloy. When the cast rod is then hot-rolled under the predetermined conditions defined in claim 1, the steel wire, as the core, and the copper or copper-alloy region, as the covering layer, are metallurgically bonded to each other, so that the core and the covering layer are firmly bonded to each other. Thus, high bonding strength can be obtained between the core and the covering layer, and corrosion can be prevented from advancing at the boundary between the core and the covering layer.

According to the present invention, moreover, the steel wire is covered with copper or copper alloy by being immersed in molten copper or molten copper alloy. By this method, a composite wire rod, having a large diameter and a thick covering layer thereon, like a trolley wire, can be manufactured at lower cost than by the electroplating method or the like.

Fig. 1 is a sectional view of a copper-clad steel trolley wire manufactured by a method according to an embodiment of the present invention;

Fig. 2 is a sectional view showing the trolley wire after abrasion; and

Fig. 3 is a diagram showing a dip forming apparatus used in the method of the invention.

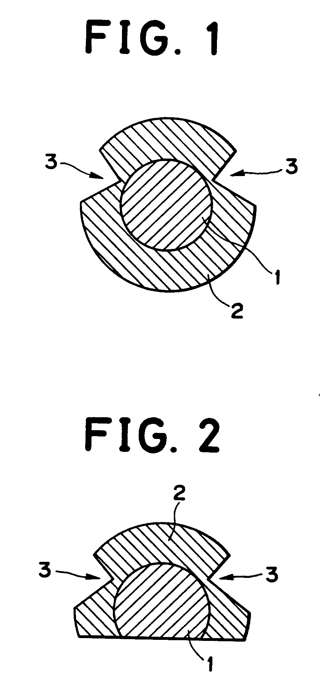

Fig. 1 is a sectional view of a copper-clad steel trolley wire manufactured by the method of the present invention, as taken along the diameter thereof. The trolley wire has a core 1 formed of a steel wire in its central portion. The core 1 is covered by covering layer 2 with a substantially uniform thickness, except the regions corresponding to fitting grooves 3. The covering layer 2 is formed of copper or copper alloy, and a pair of V-shaped grooves 3 are formed on the peripheral surface of the covering layer 2 so as to extend in the longitudinal direction of the trolley wire. The grooves 3 are held by means of metal fixtures (not shown), whereby the trolley wire is suspended.

The steel wire is used as the core 1 in order to improve the wear resistance of the trolley wire, as well as its strength. Any type of steel may be used for the steel wire. If the strength of the steel wire is too high, however, the trolley wire will be awkward to handle during its manufacturing processes or wiring work. Preferably, therefore, the material of the steel wire should have a carbon content of 0.35 % or less by weight. If the carbon content is higher than 0.35 % by weight, then the strength of the steel wire is so high that the life of a shaving die is shortened during the manufacturing processes for the composite wire by the so-called dip forming method, for example.

The copper or copper alloy is used as the covering layer 2 in order to secure the required electrical conductivity of the trolley wire and to prevent galvanic corrosion with the metal fixtures.

The covering layer 2, formed of copper or copper alloy, occupies 45 to 75 % of the cross-sectional area of the whole copper-clad steel trolley wire.

If the covering rate of the covering layer 2 is 45 % or less, its thickness is smaller than the predetermined depth of the grooves 3 cut in the composite wire. As a result, the steel core 1 is exposed through the grooves 3. If the covering rate of the covering layer 2 exceeds 75 %, the core portion naturally becomes so small that the improvement efficiency of the wear resistance is reduced. Thus, the covering rate of the covering layer 2 is adjusted to 45 to 75 % in terms of the cross-sectional area ratio (ratio of the cross-sectional area of the covering layer to that of the whole trolley wire).

In order to use this copper-clad steel composite wire as a trolley wire, its electrical conductivity should be 50 % IACS (compared with 100 % for the conductivity of annealed pure copper) or more. Accordingly, the various conditions, including the types of steel and copper or copper alloy, the covering rate, etc., should be selected so that the conductivity is 50 % or more.

The aforesaid copper alloy may be one which contains at least one of those elements including Ag, Zr, Cr, Sn, and P, at about 0.3 % by weight. The heat resistance of the covering layer 2 can be improved by the use of such a copper alloy.

The present invention is characterized in that the steel wire, as the core 1, and the copper or copper-alloy region, as the covering layer 2, are metallurgically bonded to each other. In a method for manufacturing a composite wire in which a covering layer is metallurgically bonded to a core, as described in detail later, a steel wire is immersed in molten copper or molten copper alloy by the so-called dip forming method, for example, and the resulting copper-clad cast rod is hot-rolled. The thickness of the covering layer 2 can be regulated by adjusting the time of immersion of the steel wire in molten copper.

In the composite wire in which the covering layer is metallurgically bonded to the core, atoms diffuse at the interface between the steel wire and the copper or copper-alloy region, thereby ensuring very strong bonding. Therefore, even if a compressive load is applied to the composite wire in the diametrical direction thereof, for example, the steel wire and the copper or copper-alloy region cannot be separated from each other. This also applies to a case such that the composite wire is subjected to tensile fracture stress or bending stress.

Accordingly, even if the trolley wire is worn away so that the steel core 1 is exposed, as shown in Fig. 2, water or the like can be prevented from penetrating the boundary between the core 1 and the copper or copper-alloy covering layer 2. Thus, the boundary region cannot be corroded with priority.

If the steel wire is exposed, it is corroded so that the trolley wire wears slightly. The degree of such wear, however, is lower than that of wear of the trolley wire which is attributable to abrasion and sparking caused by the slide of pantographs. On those railroad lines which are subject to much traffic or high-frequency passage of the pantographs, in particular, the wear of the trolley wire is mainly due to the abrasion and sparking, and the duration of the trolley wire is influenced little by the corrosion of the steel wire.

The copper-clad steel trolley wire, thus constructed, is covered by the copper or copper-alloy covering layer 2 with the predetermined covering rate, so that the covering layer 2 touches the metal fixtures that are used to suspend the trolley wire. Thus, galvanic corrosion cannot be caused between the metal fixtures, made of copper alloy, and the trolley wire. Since the steel wire is used as the core 1, moreover, the trolley wire is high in strength and wear resistance. If the strength of the trolley wire is thus high, then the wiring tension T can be set to a high value. In consequence, the wave propagation velocity C can be increased, as mentioned before, to permit high-speed traveling of electric trains.

Since the steel core 1 and the copper or copper-alloy covering layer 2 are metallurgically bonded to each other, the bonding strength is high, and the covering layer 2 cannot be peeled off at the bonding interface even when bending stress is applied to the trolley wire. Even if the trolley wire is worn away so that the core 1 is exposed, moreover, the bonding interface is not corroded selectively.

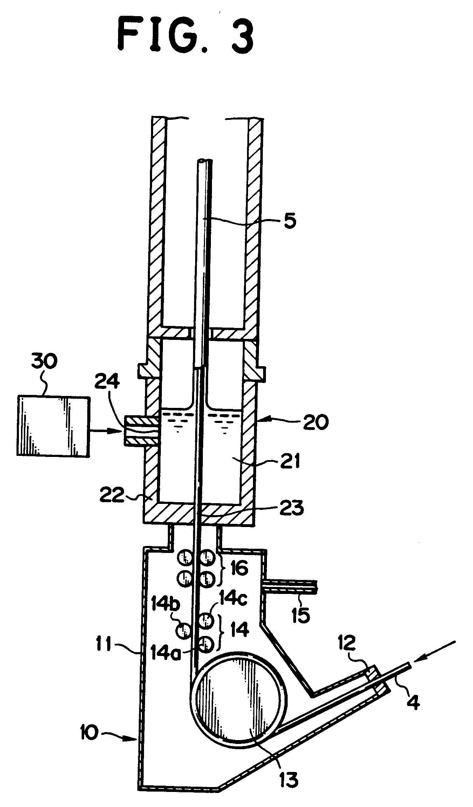

The following is a detailed description of the method for manufacturing the trolley wire constructed in the aforesaid manner. Referring first to Fig. 3, a so-called dip forming apparatus used in the aforementioned embodiment of the present invention will be described. In this dip forming apparatus, a copper or copper-alloy covering unit 20 is disposed over a wire feeder unit 10.

An airtight housing 11 of the feeder unit 10 is provided with an exhaust port 15, which is coupled to a suitable vacuum exhaust unit (not shown). The inside of the housing 11 is evacuated through the exhaust port 15 to be kept at a predetermined degree of vacuum. The shaving die 12 is located at a wire inlet of the lateral wall of the housing 11. The steel wire 4 is fed through this inlet into the housing 11, and its outermost surface layer is cut off by means of the shaving die 12.

A capstan 13 is set in the housing 11, and the steel wire 4 is wound around the capstan 13 to be pulled and redirected upward thereby. Two pairs of pinch rollers 16 are arranged inside the upper portion of the housing 11. The steel wire 4 is driven to be drawn out by means of the pinch rollers 16 so that it is fed from the housing 11 into the covering unit 20.

A straightening unit 14 for correcting a bend of the steel wire 4 is disposed in that region inside the housing 11 between the pinch rollers 16 and the capstan 13. The straightening unit 14 includes two rollers 14a and 14c, adapted to roll on the inside of the steel wire 4 bent by the capstan 13, and a roller 14b rollable on the outside of the steel wire between the rollers 14a and 14c. The steel wire 4 fed from the capstan 13 is brought into rolling contact with the rollers 14a, 14b and 14c in succession, whereby its bend, produced by the capstan 13, is corrected. The rollers 14a, 14b and 14c may be rotated positively by means of a suitable drive unit (not shown) or be driven like an idler only by the steel wire 4. The distances between the rollers 14a, 14b and 14c can be adjusted depending on the type of the steel wire, the degree of the bend, etc.

The covering unit 20 includes a crucible 22 which is stored with the molten copper or copper alloy 21. The crucible 22, which is made of refractory material such as graphite, is coupled to the housing 11 of the feeder unit 10 in a manner such that the top outlet of the housing 11 is closed airtight by the outer bottom surface of the crucible 22. The crucible 22 is formed, at its bottom portion, with an insertion aperture 23 having a little larger diameter than the steel wire 4. Thus, the steel wire 4 is introduced into the crucible 22 through the aperture 23, in a liquid-tight manner.

A molten metal feed port 24, which is formed in the flank of the crucible 22, is connected to a copper or copper-alloy melting unit 30. Thus, the molten metal 21 is fed into the crucible 22 through the feed port 24.

A wire draw-out unit (not shown) is disposed above the covering unit 20. A composite cast rod 5, which is composed of the steel wire 4 covered by copper or copper alloy, is drawn out upward by means of the draw-out unit. The composite cast rod 5 is delivered from the covering unit 20 to a hot-rolling apparatus (not shown) in the next stage.

According to the embodiment of the present invention described above, the steel wire is covered with copper or copper alloy by using the dip forming apparatus of the aforementioned construction, and the resulting composite wire is then hot-rolled.

First, the steel wire 4 is fed into the evacuated housing 11 while its outermost layer is being continuously cut off by the shaving die 12, as shown in Fig. 3. Having its surface cleaned in this manner, the steel wire 4 is passed around the capstan 13 to change its course upward. Although the steel wire 4 is thus bent by the capstan 13, it is straightened by means of the rollers 14a, 14b and 14c of the straightening unit 14.

Subsequently, the steel wire 4 is drawn out upward by means of the pinch rollers 16, and is introduced into the crucible 22 through the insertion aperture 23 at the bottom portion of the crucible. Then, the steel wire 4 is drawn out upward through the crucible 22 so that the molten metal 21 in the crucible adheres to the steel wire in the meantime. The adhered molten metal 21 solidifies, thereby completing the composite cast rod 5 which is composed of the steel wire 4 having copper or copper alloy on the peripheral surface thereof.

The composite cast rod 5 is then hot-rolled at a temperature of 750 to 850 °C and with a rolling ratio of 10 to 40 %, by means of the hot-rolling apparatus. Thereupon, the steel wire, as the core, and the copper or copper-alloy region, as the covering layer, are coupled metal to metal, that is, the covering layer is metallurgically bonded on the core.

If the rolling ratio used is lower than 10 %, the steel wire and the copper or copper-alloy region cannot be bonded satisfactorily. If the ratio is higher than 40 %, on the other hand, the degree of working is too high to obtain a uniform thickness of the copper or copper-alloy covering layer. According to the present invention, the rolling ratio is set within the range of 10 to 40 % for those reasons. The rolling temperature range of 750 to 850 °C is used in order to ensure strong metallurgical bonding and to facilitate the rolling work with the aforementioned rolling ratio.

After the hot rolling, the composite wire is drawn and grooved. More specifically, a pair of V-shaped grooves 3 are formed on the copper or copper-alloy covering layer 2 which covers the steel core 1, as shown in the sectional view of Fig. 1. Thus, the trolley wire is completed.

According to the present embodiment, the steel wire is covered with copper or copper alloy by the so-called dip forming method, so that the copper-clad steel trolley wire can be manufactured at low cost. The trolley wire is composed mainly of a thick wire rod with a diameter of 10 mm or more, and the covering layer (copper or copper alloy) must be formed thick enough for the formation of the wiring grooves. When forming the covering layer by electroplating or the like, therefore, the cost of manufacture of the copper-clad steel wire is very high. In contrast with this, if the copper or the copper-alloy layer is formed by the dip forming method, as in the case of the present embodiment, the composite wire for the trolley wire can be manufactured at low cost.

In the present embodiment, the steel wire 4, having been passed around the capstan 13 and bent, are straightened by means of the rollers 14a, 14b and 14c of the straightening unit 14. A conventional dip forming apparatus for copper wire is not provided with such a straightening unit. When dip-forming the steel wire, as in the case of this embodiment, it is difficult to introduce the steel wire smoothly into the crucible 22 without the use of the straightening unit 14.

Since the steel wire 4 is harder than a copper wire, it positively bends when it is passed around the capstan 13. The bend cannot be corrected by only pulling the steel wire 4 by means of the pinch rollers 16. Thus, the steel wire 4 may possibly be caught by the insertion aperture 23 of the crucible 22, thereby interrupting the operation. In the present embodiment, however, the steel wire 4 is straightened by means of the three rollers 14a, 14b and 14c, it can be fed steadily into the crucible 22 without jamming or interference at the aperture 23.

The following is a description of the test results of examples of the copper-clad steel trolley wire according to the present invention, compared with the results of tests on comparative examples and prior art trolley wires.

In the trolley wires of the examples and the comparative examples, the core was formed from a mild steel wire rod JISG-3505/SWRM-10 (14-mm diameter) of the composition shown in Table 1.

## Table 1

| JISG-3505/<br>SWRM-10 | C | Mn | P | S |
|---|---|---|---|---|
| (% by wt.) | 0.08<br>to 0.13 | 0.30<br>to 0.60 | 0.045<br>or less | 0.045<br>or less |

The outermost layer portion of this mild steel wire rod was removed by means of the shaving die 12, and a core wire with a diameter of 12.7 mm was obtained. This core wire was straightened by means of the straightening unit 14, and was then delivered to the covering unit 20. In this case, when the distances between the rollers 14a, 14b and 14c were adjusted suitably, the bend length was able to be restricted to about 3 to 10 mm in a section of 1,000-mm length. When the straightening unit 14 was not used, on the other hand, the steel core wire bent for a length of about 40 to 60 mm in the 1,000-mm section, thus failing to be passed through the insertion aperture 23 with stability.

According to Example 1 in which a covering rate of 45 % is used, for example, a copper-clad steel cast rod with a diameter of 17 mm was manufactured by covering the peripheral surface of the steel core wire 4 with copper by means of the covering unit 20, based on the dip forming method. Then, the cast rod was hot-rolled (30 % rolling ratio) to obtain a composite wire with a diameter of 14.5 mm. By this hot rolling, the steel core wire and the copper region were metallurgically bonded to each other.

Subsequently, the wire was drawn into a wire rod with a diameter of 13.1 mm, and was then grooved. Thus, a trolley wire having the cross-sectional shape shown in Fig. 1 and a cross-sectional area of 110 mm$^2$ was completed. The trolley wires of Examples 2 and 3 and Comparative Examples 1 and 2, having different covering rates, were manufactured in the same manner as the trolley wire of Example 1.

The covering rate of the copper covering layer can be varied by adjusting the immersion time for the steel wire in the crucible 22 and the like. Thus, a copper covering layer of a required thickness can be formed.

The electrical conductivity and tensile strength of these trolley wires were measured. Also, the exposure of steel, fixture mounting capability, and wear resistance were tested on the trolley wires. Table 2 shows the results of these measurements and tests, along with test results for the prior art trolley wires.

Table 2

| | | Copper Ratio (%) | Conductivity (% IACS) | Tensile Strength (kgf/mm$^2$) | Exposure of Steel at Grooves | Fixture Mounting Capability | Wear Resistance |
|---|---|---|---|---|---|---|---|
| Example | 1 | 45 | 50 | 70 | None | Good | Good |
| | 2 | 55 | 60 | 65 | None | Good | Good |
| | 3 | 75 | 77 | 50 | None | Good | Good |
| Comparative Example | 1 | 40 | 45 | 75 | Some | Poor | Good |
| | 2 | 80 | 81 | 47 | None | Good | Moderate |
| Prior Art Example | 1 | 100 | 100 | 35 | None | Good | Poor |
| | 2 | 100 | 75 | 40 | None | Good | Moderate |
| | 3 | - | 49 | 24 | None | Poor | Good |

Comparative Examples 1 and 2 were manufactured in the same manner as Examples 1 to 3. However, the copper volume ratio (covering rate) of Comparative Example 1 is as low as 40 %, while that of Comparative Example 2 is as high as 80 %. The trolley wires of Prior Art Examples 1, 2 and 3 are a copper wire, copper-alloy wire, and aluminum-clad steel wire, respectively. The cross-sectional area of the trolley wire of Prior Art Example 3 is 200 mm$^2$, while that of the other trolley wires is 110 mm$^2$.

In Examples 1 to 3, the tensile strength of each trolley wire is as high as 50 kgf/mm$^2$ or more, and the steel core and the copper covering layer are firmly metallurgically bonded to each other. Thus, the trolley wires of these examples have high galvanic resistance. The trolley wires of Examples 1 to 3, moreover, have high electrical conductivity of 50 % IACS or more, and are high in wear resistance. It was ascertained that if the copper covering layer is worn away so that the steel core starts to be exposed, the trolley wire cannot easily wear any more. Since the trolley wire can be installed with use of conventional metal fixtures, furthermore, its fixture mounting capability is high.

In Comparative Example 1, in contrast with this, the covering rate is as low as 40 %, so that the electrical conductivity is as low as 45 %. Thus, the steel may possibly be exposed through the grooves to suffer galvanic corrosion, that is, the fixture mounting capability is low. In Comparative Example 2, moreover, the covering rate is so high as 80 % that the steel wire portion is too small to produce the effect of improvement of the wear resistance. Thus, the wear resistance of Comparative Example 2 is not high enough.

In the copper trolley wire and the copper-alloy trolley wire of Prior Art Examples 1 and 2, both the strength and the wear resistance are low. The aluminum-clad steel trolley wire of Prior Art Example 3 is also low in strength, and besides, may suffer galvanic corrosion with copper-alloy fixtures, thus proving poor in fixture mounting capability.

Although the trolley wires of the above examples have the cross-sectional area of 110 mm$^2$, it is to be understood that the present invention may be also applied to trolley wires of any other types, such as those with a cross-sectional area of 170 mm$^2$.

The following is a description of the results of an investigation on the relationship between the type of steel of the steel wire and the duration of the shaving die. Table 3 shows the relationships between the type of steel of the steel wire, carbon content, evaluation of shaving capability, and steel wire strength (after annealing).

Table 3

| Type of Steel of Steel Wire | Carbon Content (%) | Shaving Capability | Steel Wire Strength (kgf/mm$^2$) |
|---|---|---|---|
| SWRM-6 | 0.06 | Good | 38 |
| SWRM-10 | 0.11 | Good | 45 |
| SWRH-37 | 0.35 | Good | 55 |
| SWRH-42A | 0.40 | Poor | 60 |

The shaving capability was evaluated as "Poor" when the duration of the shaving die 12 was shorter than 3 hours, and as "Good" when the die's duration is 3 hours or longer. As seen from Table 3, if the carbon content is higher than 0.35 % by weight (SWRH-42A), the steel wire strength is so high that the duration of the shaving die 12 is short. Accordingly, the operation must be interrupted more frequently for the replacement of the die, thus entailing higher costs. Preferably, therefore, the steel wire used should have a carbon content of 0.35 % or less by weight.

Instead of using the steel wire with the carbon content of 0.35 % or less by weight, an alloy wire or the like may be used, provided its strength after annealing is equal to that of the steel wire.

**Claims**

1. A method for manufacturing a copper-clad steel trolley wire comprising:

   a process for continuously immersing a steel wire (4) in molten copper or molten copper alloy (21) and then solidifying the copper or copper alloy to cause the same to adhere to the peripheral surface of said steel wire, thereby obtaining a cast rod (5) consisting essentially of said steel wire and copper or copper alloy layer covering the peripheral surface of said steel wire; and

   a process for hot-rolling said cast rod (5) at a temperature of 750 to 850 °C and with a rolling ratio of 10 to 40 %.

2. The method according to claim 1, characterized in that the carbon content of said steel wire (1,4) is 0.35 % or less by weight.

**3.** The method according to claim 1, characterized in that the cross-sectional area of the copper or copper-alloy region ranges from 45 to 75 % of that of the copper-clad steel trolley wire after said hot rolling.

**4.** The method according to claim 1, characterized in that said steel wire (4) is immersed in molten copper or molten-copper alloy after being straightened.

**5.** The method according to claim 4, characterized in that said steel wire (4) is immersed in molten copper or molten-copper alloy (21) after the outermost layer of said steel wire is cut off by means of a shaving die (12).

**6.** The method according to claim 4 or 5, characterized in that said straightened steel wire is introduced into a vessel (22), containing molten copper or molten-copper alloy (21), through the bottom portion thereof, so that said molten metal adheres to the peripheral surface of said steel wire while said steel wire is being drawn up in said vessel.

**Patentansprüche**

**1.** Verfahren zum Herstellen eines kupferummantelten Stahl-Oberleitungsdrahts, das umfaßt:

ein Verfahren zum kontinuierlichen Eintauchen eines Stahldrahts (4) in flüssiges Kupfer oder flüssige Kupferlegierung (21) und zum nachfolgenden Verfestigen des Kupfers oder der Kupferlegierung, so daß dieses an der Umfangsfläche des Stahldrahts anhaftet, wodurch ein Gußstab (5) erhalten wird, der im wesentlichen aus dem Stahldraht und einer die Oberfläche des Stahldrahts bedeckenden Schicht aus Kupfer oder Kupferlegierung besteht; und

ein Verfahren zum Warmwalzen des Gußstabs (5) bei einer Temperatur von 750 bis 850 °C und mit einem Walzverhältnis von 10 - 40 %.

**2.** Verfahren nach Anspruch 1, dadurch gekennzeichnet, daß der Kohlenstoffgehalt des Stahldrahtes (1, 4) 0,35 Gewichts-% oder weniger beträgt.

**3.** Verfahren nach Anspruch 1,
dadurch gekennzeichnet, daß die Querschnittsfläche des Kupfer- oder Kupferlegierungs-Bereichs im Bereich von 45 bis 75 % derjenigen des kupferummantelten Stahl-Oberleitungsdrahts nach dem Warmwalzen liegt.

**4.** Verfahren nach Anspruch 1,
dadurch gekennzeichnet, daß der Stahldraht (4) in das flüssige Kupfer oder die flüssige Kupferlegierung getaucht wird nachdem er geradegerichtet wurde.

**5.** Verfahren nach Anspruch 4,
dadurch gekennzeichnet, daß der Stahldraht (4) in das flüssige Kupfer oder die flüssige Kupferlegierung (21) getaucht wird, nachdem die Oberflächenschicht des Stahldrahts mittels eines Schabwerkzeugs (12) abgeschält wurde.

**6.** Verfahren nach Anspruch 4 oder 5,
dadurch gekennzeichnet, daß der geradegerichtete Stahldraht in ein Gefäß (22), das geschmolzenes Kupfer oder geschmolzene Kupferlegierung (21) enthält, durch dessen Bodenbereich eingeführt wird, so daß das flüssige Metall beim Hochziehen des Stahldrahts im Gefäß an der Oberfläche des Stahldrahts anhaftet.

**Revendications**

**1.** Procédé pour fabriquer un fil de contact en acier cuivré, comprenant :

un traitement consistant à immerger en continu un fil d'acier (4) dans du cuivre fondu ou dans un alliage de cuivre fondu (21), puis à solidifier le cuivre ou l'alliage de cuivre pour le faire adhérer sur la surface périphérique dudit fil d'acier, pour obtenir de cette façon une barre moulée (5) essentiellement composée dudit fil d'acier et de la couche de cuivre ou d'alliage de cuivre qui recouvre la surface périphérique dudit fil d'acier ; et

un traitement pour laminer à chaud ladite barre moulée (5) à une température de 750 à 850°C et avec un taux de laminage de 10 à 40 %.

2. Procédé selon la revendication 1, caractérisé en ce que la teneur en carbone dudit fil d'acier (1, 4) est de 0,35 % ou moins en poids.

3. Procédé selon la revendication 1, caractérisé en ce que la surface de section de la région de cuivre et d'alliage de cuivre est dans l'intervalle de 45 à 75 % de celle du fil de contact en acier cuivré après ledit laminage à chaud.

4. Procédé selon la revendication 1, caractérisé en ce que ledit fil d'acier (4) est immergé dans le cuivre fondu ou l'alliage de cuivre fondu après avoir été redressé.

5. Procédé selon la revendication 4, caractérisé en ce que ledit fil d'acier (4) est immergé dans le cuivre fondu ou l'alliage de cuivre fondu (21) après que la couche extrême extérieure dudit fil d'acier a été enlevée au moyen d'une filière de rasage (12).

6. Procédé selon la revendication 4 ou 5, caractérisé en ce que ledit fil d'acier redressé est introduit dans une cuve (22) contenant du cuivre fondu ou un alliage de cuivre fondu (21), à travers la partie basse de cette cuve, de sorte que le métal fondu adhère à la surface périphérique dudit fil d'acier pendant que ce fil d'acier est tiré de bas en haut dans ladite cuve.

EP 0 298 518 B1

# FIG. 1

# FIG. 2

# FIG. 3